# FASCICULE DE BREVET EUROPEEN

(11) **EP 0 377 894 B1**
(45) Date de publication et mention de la délivrance du brevet: **24.01.1996**
(21) Numéro de dépôt: 89123957.6
(22) Date de dépôt: 27.12.1989
(51) Int. Cl.: G06F 5/06

(54) **Système de détection d'écrasement de données dans une mémoire tampon, notamment pour un commutateur de données**
System zum Detektieren, dass Daten in einem Pufferspeicher gelöscht worden sind, insbesondere für einen Datenschalter
System to detect the erasure of data in a buffer memory, in particular for a data switch

(30) Priorité: 30.12.1988 FR 8817503
(43) Date de publication de la demande: 18.07.1990
(73) Titulaire: ALCATEL CIT, F-75008 Paris (FR)
(72) Inventeur: Soutoul, Michel, F-92330 Sceaux (FR)
(74) Mandataire: Weinmiller, Jürgen

(56) Documents cités:
- EP-A- 0 033 672
- US-A- 3 680 055
- IBM TECHNICAL DISCLOSURE BULLETIN, vol. 23, no. 1, juin 1980, pages 286-287, New York, US; L. S. ROGERS: "Block buffer overrun control"
- IBM TECHNICAL DISCLOSURE BULLETIN, vol. 9, no. 10, mars 1967, pages 1334-1335, New York, US; M.C. DALES et al.: "First-in, first-out buffer controls"

## Description

Le domaine de l'invention est celui des systèmes de gestion de l'accès à une mémoire de stockage de données à capacité limitée, par un dispositif d'écriture et par un dispositif de lecture indépendants.

Une configuration de ce type apparaît notamment dans des systèmes de commutation de données du type de la famille de commutateurs connus sous la dénomination "ALCATEL8300".

L'invention va être présentée ci-après plus spécifiquement en relation avec ce type de commutateur. Toutefois, elle s'applique bien entendu à tout autre domaine faisant intervenir une mémoire tampon sur laquelle l'opération de lecture des données s'effectue indépendamment de l'écriture des données successives dans la mémoire.

Un commutateur de données a pour fonction de recevoir des données numériques apportées par des lignes de transmission, de trier ces données, puis de les regrouper de façon à les réexpédier sur des lignes d'émission adéquates.

Les lignes sont souvent associées par paires, comprenant une ligne de réception et une ligne d'émission assurant une liaison avec une même station distante. Ces paires de lignes se connectent en parallèle à un bus appelé bus de transmission, comportant des coupleurs de lignes gérant l'accès des lignes de transmission au bus de transmission. Un coupleur du bus de transmission (CBT) assure le transfert des données reçues vers les moyens de traitement du commutateur, et le transfert des données traitées et regroupées dans le commutateur en direction des lignes d'émission connectées au bus de transmission.

Le CBT interroge les lignes par des cycles d'interrogation en émission puis en réception. De façon systématique, si une ligne interrogée en réception dispose d'un caractère reçu, (octet de donnée reçu depuis la ligne), le CBT exécute, via le bus de transmission, un cycle de transfert de donnée par lequel il récupère le caractère et le stocke dans sa mémoire de données dans un tampon consacré à la ligne interrogée en réception (mémoire de ligne réception). Si une ligne interrogée en émission appelle un caractère à émettre (octet de donnée à envoyer sur la ligne), le CBT exécute un cycle de transfert de données par lequel il prend le caractère à émettre dans sa mémoire de données dans un tampon consacré à la ligné interrogée en émission (mémoire de ligne émission) et le transmet vers la ligne.

L'invention concerne plus particulièrement la mémoire de ligne réception du coupleur de bus de transmission.

Ces mémoires de ligne réception sont accédées par un dispositif d'écriture et un dispositif de lecture à fonctionnements indépendants. Le fonctionnement du dispositif d'écriture dépend de l'occurrence de l'autorisation d'accès de la ligne de réception au bus de transmission, et du débit des données acheminées par la ligne de réception. Le fonctionnement du dispositif de lecture est asservi aux autorisations d'accès aux moyens de traitement interne au commutateur. Lorsque la mémoire tampon de ligne réception est de capacité limitée, il peut donc se produire des surcharges en réception, c'est-à-dire une vitesse d'écriture dans la mémoire durablement supérieure à la vitesse de lecture des données précédentes. Si la mémoire tampon est une mémoire (du type FIFO) tournante, cette surcharge en réception peut se traduire par un écrasement des données les plus anciennes, et donc une perte définitive de ces données.

On connait des systèmes visant à gérer les surcharges en réception.

Ces systèmes connus fonctionnent selon un principe de surveillance du taux de remplissage de la mémoire de ligne réception, avec marquage de dépassement de seuils successifs de remplissage donnant lieu à la génération d'interruptions vers un microprocesseur-pilote chargé de gérer le CBT. Sous commande de ces interruptions, le microprocesseur-pilote commande le vidage, partiel ou total, de la mémoire tampon en initialisant des moyens de lecture en accès direct de la mémoire (DMA). Avec un tel système connu, on contrôle les risques d'écrasement. Si le système fonctionne parfaitement, les conditions d'écrasement sont supprimées. Toutefois, on peut également tolérer que des écrasements de données se produisent, s'ils restent rares. Dans ce cas, de façon connue, le système est muni de moyens de détection des pertes de caractères généralement au niveau des moyens de traitement des données reçues, lesquels commandent la répétition de la transmission des données perdues.

Quelles que soient les conditions de fonctionnement, (écrasement supprimé ou toléré) ce mécanisme connu de surveillance à gestion d'interruption présente l'inconvénient d'accaparer le microprocesseur. Le programme exécuté par le microprocesseur-pilote doit en effet comporter une tâche de surveillance des niveaux de remplissage de la mémoire de ligne réception, qui doit être lancée pour chaque ligne en réception ce qui obère la puissance globale du microprocesseur pilote.

La demande de brevet européen EP-A- 0 033 672 décrit un dispositif d'aiguillage de données numériques émises par "n" circuits d'entrée vers un circuit de sortie, comportant "n" mémoires vives, dites mémoires d'attentes, destinées à mémoriser les données numériques émises respectivement par l'un des "n" circuits d'entrée, à des adresses d'écriture fournies par ce circuit d'entrée. Ces mémoires sont munie de sorties reliées à une ligne "omnibus" de sortie reliée elle-même au circuit de sortie.

Pour éviter tout conflit en cas d'émission simultanée de données numériques par plusieurs circuits d'entrée, il est prévu un circuit de gestion de la lecture des mémoires d'attente, qui comporte :
- "n" mémoires vives, dites mémoires de gestion, chacune étant destinée à mémoriser les adresses d'écriture de la mémoire d'attente qui lui est associée; chaque mémoire de gestion étant munie de sorties reliées aux entrées d'adresse de lecture de la mémoire d'attente qui lui est associée;
- un circuit d'adressage séquentiel en écriture et en lecture, commun aux "n" mémoires de gestion, incrémenté en écriture lors de chaque écriture par un circuit d'entrée dans les mémoires d'attente; et en lecture, lors de chaque lecture des mémoires d'attente par le circuit de sortie;
- un circuit d'établissement de priorité de lecture des mémoires d'attente, et de blocage du circuit d'adressage séquentiel en lecture, en cas d'émission simultanée par plusieurs circuits d'entrée;
- un circuit de validation d'une mémoire de gestion parmi "n", la validation étant effectuée lors de l'écriture des mémoires de gestion par le circuit d'entrée associé à la mémoire de gestion, et lors de la lecture des mémoires de gestion par le circuit d'établissement de priorité et de blocage.

Ce dispositif connu ne traite pas le problème de l'écrasement de donnée à la suite d'un débordement de mémoire.

Le document IBM Technical Disclosure Bulletin vol. 23 n° 1 juin 1980, pages 286-287, NEW YORK US, décrit un dispositif pour éviter des lectures erronées dans une mémoire tampon, quand le rythme de lecture est supérieur au rythme d'écriture de données dans cette mémoire tampon. Il y a alors un risque de lire des données qui ont déjà été lues et qui n'ont pas encore été remplacées par de nouvelles données. Ce dispositif comporte une mémoire pour mémoriser l'adresse d'écriture courante. Un comparateur compare l'adresse de lecture courante avec l'adresse d'écriture courante, et fournit au récepteur de données un signal autorisant une lecture seulement si l'adresse de lecture courante est inférieure à l'adresse d'écriture courante. Le récepteur de données doit donc assurer une tâche de surveillance de ce signal pour cesser la lecture lorsqu'elle n'est plus autorisée.

Le document US-A- 3 680 055 décrit un dispositif qui est associé à une mémoire tampon tournante. Chaque emplacement de la mémoire tampon possède un bit pour stocker un indicateur de débordement. Cet indicateur est inscrit au moment où est réalisée la dernière écriture encore possible dans la mémoire tampon. Il indique que les données reçues après celles mémorisées dans l'emplacement repéré par cet indicateur ont été perdues. Cet indicateur est engendré par un circuit comparant un pointeur d'adresse de lecture et un pointeur d'adresse d'écriture, afin d'inscrire cet indicateur lorsque l'adresse de lecture rejoint l'adresse d'écriture.

Ce dispositif envoie au récepteur de données un signal inhibant la commande d'écriture quand l'indicateur indique que la mémoire est saturée, afin de ne pas écraser des données qui n'ont pas été lues. Le récepteur doit donc assurer une tâche de surveillance de ce signal.

L'invention a pour cadre une chaîne de transmission à tolérance d'écrasement de données, et comporte notamment comme objectif de fournir un système de détection d'écrasement de données au niveau de la mémoire tampon, sans que le micro-processeur pilote du CBT n'ait à gérer une tâche de surveillance de l'ensemble des mémoires tampon des lignes de réception.

Cet objectif, ainsi que d'autres qui apparaîtront par la suite, est atteint à l'aide d'un système de détection d'écrasement de données dans une mémoire tampon, notamment pour une mémoire tampon affectée à la réception de données fournies par une ligne de transmission et destinées à être traitées par un commutateur de données la mémoire tampon étant une mémoire FIFO tournante; comportant :
- un processeur;
- des moyens d'écriture pour écrire des données provenant de la ligne de réception, l'écriture dans la mémoire tampon étant effectuée en fonction du débit d'alimentation desdites données ;
- des moyens de lecture pour lire des données dans la mémoire tampon, pour les acheminer vers les moyens de traitement du commutateur, la lecture étant asservie au séquencement des moyens de traitement ;
- des moyens pour détecter l'écrasement de données dans un emplacement de la mémoire tampon, à partir d'informations fournies par les moyens d'écriture et par les moyens de lecture;
- des moyens pour mémoriser chaque écrasement;
- des moyens pour signaler une faute au processeur, cette faute consistant à lire la mémoire tampon à un emplacement où les données ont été écrasées avant d'être lues;
   caractérisé en ce que les moyens pour lire des données dans la mémoire tampon et les moyens pour signaler une faute au processeur comportent une logique câblée à accès direct à la mémoire tampon, activée par le processeur;
   et en ce que cette logique câblée signale une faute au processeur uniquement au moment où des données sont lues dans la mémoire tampon,
   en ce que les moyens pour mémoriser chaque écrasement comportent des moyens de description de l'état des emplacements de données dans la mémoire tampon susceptibles de prendre au moins trois valeurs distinctes :
- emplacement libre;
- emplacement occupé valide;
- emplacement occupé non valide,
   et en ce que lesdits moyens de description coopérent avec les moyens d'écriture et les moyens de lecture pour la mise à jour desdites valeurs prises par lesdits moyens de description de l'état des emplacements des données dans la mémoire.

Avantageusement :
- l'état libre correspond à un emplacement dont la donnée a été lue par les moyens de lecture;
- l'état occupé valide désigne un emplacement dont la donnée n'a pas encore été lue, et qui n'a pas subi d'écrasement (c'est-à-dire qui n'a pas fait l'objet d'une double écriture depuis la dernière lecture);
- l'état occupé non valide décrit un emplacement ayant subi un écrasement.

Dans un mode préférentiel de réalisation, ces moyens de description de l'état des emplacement comportent des premiers moyens de description de l'état de disponibilité de la mémoire en écriture, lesdits moyens de description de disponibilité étant mis à jour par lesdits moyens de lecture des données dans la mémoire; et comportent des seconds moyens de description de la validité des données de la mémoire, lesdits moyens de description de validité étant mis à jour par les moyens d'écriture de données dans la mémoire, en fonction de l'état de disponibilité au moment de l'écriture.

La coopération des moyens de description de disponibilité, et des moyens de description de validité, permet ainsi d'une part de détecter les écrasements de caractères reçus en mémoire de ligne réception, et d'autre part d'informer le microprocesseur-pilote de l'écrasement au moment du transfert de données en lecture.

La tâche logicielle de surveillance des niveaux de remplissage atteints en mémoire de ligne réception peut donc être supprimée dans le microprocesseur.

De façon préférentielle, lesdits moyens de description de disponibilité et lesdits moyens de description de validité sont réalisés chacun sous forme d'une table de drapeaux, chaque drapeau étant constitué par un bit associé à au moins un enregistrement de la mémoire.

Avantageusement, lesdits moyens de disponibilité et/ou de validité sont accédés par lesdits moyens de lecture simultanément à l'accès à ladite mémoire de stockage des données.

Selon une caractéristique essentielle de l'invention, les moyens de traitement sont avertis d'un écrasement en mémoire tampon par le fait que lesdits moyens de lecture acquièrent une information de validité de donnée pour chacune des données lues dans la mémoire tampon, et que des moyens de signalisation de faute en direction des moyens de traitement sont activés lorsque l'information de validité est à l'état "non valide".

De façon avantageuse, les moyens de formation de ladite information de validité de données comprennent des moyens de calcul et d'enregistrement d'un bit de parité pour chaque donnée écrite dans la mémoire tampon, et des moyens de forçage en faute du bit de parité de chaque donnée en lecture dans la mémoire tampon en fonction de l'état des moyens de description de la validité de la donnée.

Dans un mode de réalisation avantageux de l'invention, le système comprend des moyens de rejet de la trame courante et d'activation d'une procédure de récupération de trame lorsque lesdits moyens de signalisation sont à l'état "faute".

La mise en oeuvre de l'invention permet donc de libérer le microprocesseur-pilote -pilote d'une tâche accaparante, tout en évitant d'effectuer- une gestion de la mémoire tampon au moyen de pointeurs de lecture/écriture ou autre.

Le système de l'invention répond parfaitement à la situation d'indépendance totale des moyens d'écriture et des moyens de lecture dans la mémoire tampon, au prix d'un léger surcoût en place mémoire, mais en apportant l'avantage décisif d'une simplicité de gestion des écrasements de données.

Dans un mode de réalisation particulier de l'invention, les moyens d'écriture comprennent des moyens de chargement des trames de données par blocs de N données maximum (N étant inférieur à la capacité de la mémoire), et des moyens de marquage des fins de blocs chargéa dans ladite mémoire,
et lesdits moyens de marquage coopèrent avec des moyens d'émission d'un signal d'activation desdits moyens de lecture lorsqu'au moins un bloc de données est présent dans la mémoire.

Avantageusement, lesdits moyens d'émission d'un signal d'activation comprennent un compteur du nombre de trains présents dans la mémoire, ledit compteur étant incrémenté par lesdits moyens de chargement de blocs de données, et décrémenté par lesdits moyens de lecture, ainsi que des moyens d'émission d'une interruption en direction d'un microprocesseur de commande des moyens de lecture lorsque ledit compteur marque une valeur non nulle.

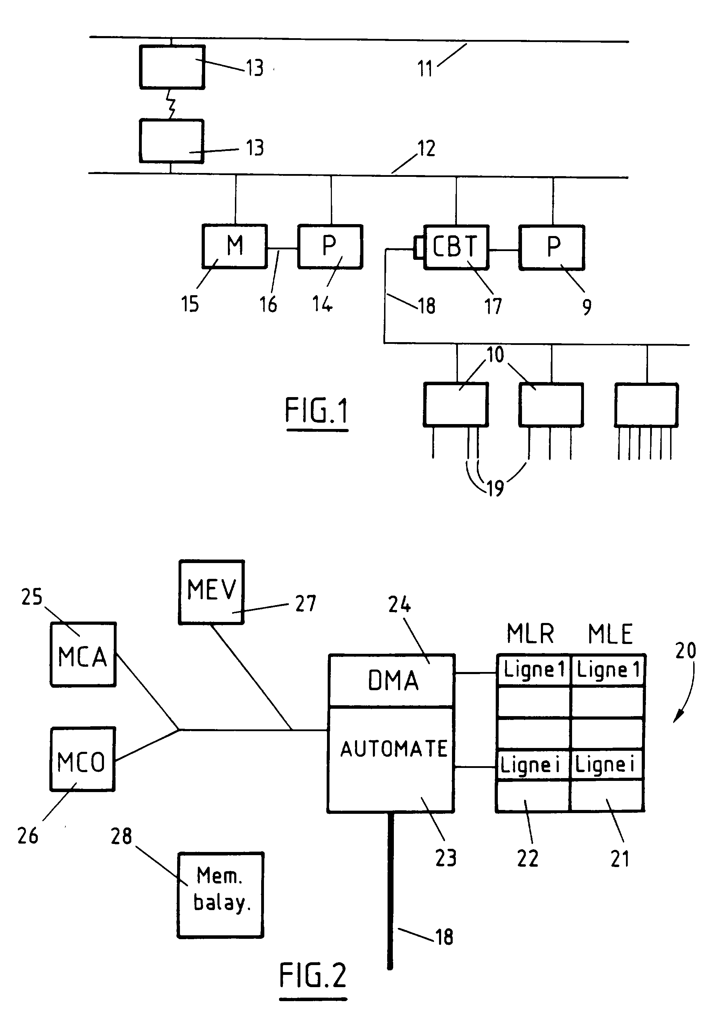

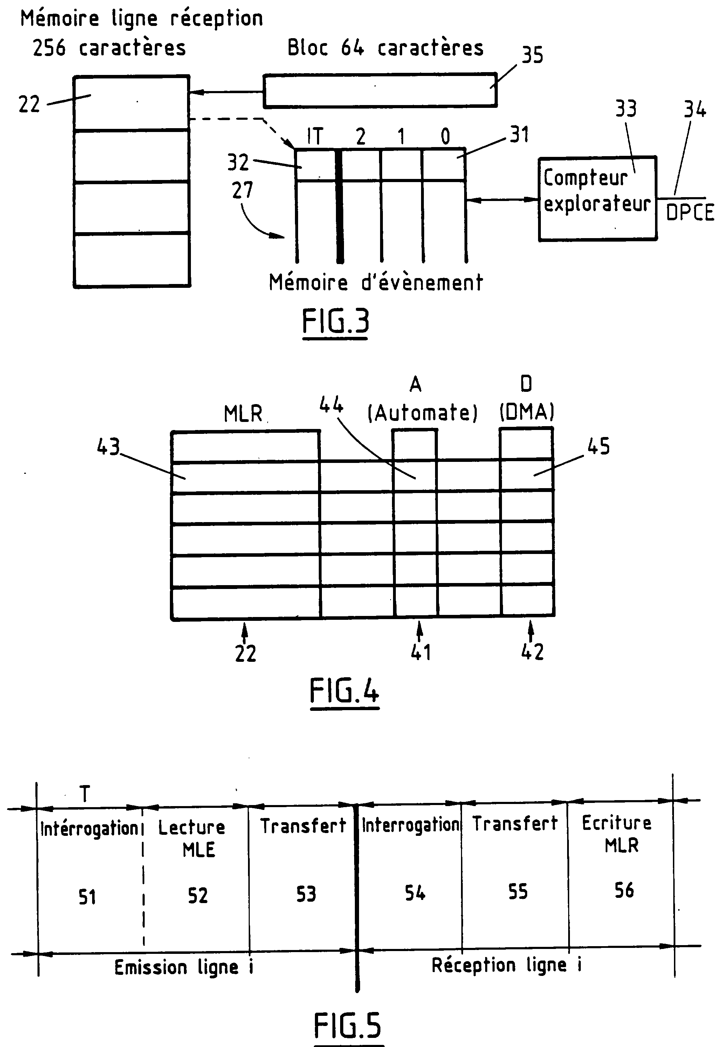

D'autres caractéristiques et avantages de l'invention apparaîtront à la lecture de la description suivante d'un mode de réalisation illustratif et non limitatif de l'invention, et des dessins annexés, dans lesquels :
. la figure 1 schématise l'architecture générale d'un commutateur de données muni d'un coupleur de bus de transmission, dans lequel le bus de transmission assure la connexion de paires de lignes d'émission/réception associables à un système de détection d'écrasement de données selon l'invention, dans chaque mémoire tampon associée aux lignes réception ;
. la figure 2 schématise la structure logique d'un coupleur de bus de transmission, comprenant une mémoire tampon des données en émission et en réception, dans un commutateur de données du type de celui de la figure 1 ;
. la figure 3 schématise le fonctionnement de la chaîne d'activation des moyens de lecture de la mémoire ligne réception par l'intermédiaire d'une mémoire d'événement, et d'un compteur explorateur.
. la figure 4 schématise l'organisation des tables de drapeaux de disponibilité et de validité selon l'invention, en relation avec l'organisation de la mémoire de réception ;
. la figure 5 schématise le séquencement des opérations d'émission, puis de réception sur une ligne i à paires de fils, connectée à un commutateur de données.

L'architecture du commutateur de données schématisée en figure 1 correspond à une version simplifiée d'un système informatique multiprocesseur à bus principaux multiples.

Dans l'exemple qui est retenu pour la description détaillée ci-après, le commutateur de données comporte des moyens de traitement formés par des bus principaux 11, 12 reliés entre eux par des coupleurs de bus 13. Sur chaque bus principal 11, 12, est connecté un jeu de processeurs 14, éventuellement associés chacun à une mémoire locale 15 à travers un bus local 16.

Ces moyens de traitement reçoivent les données d'entrée, puis restituent les données traitées par un coupleur de bus de transmission (CBT) 17 avec microprocesseur-pilote 9 connecté au bus principal 12 et au bus de transmission 18. Des lignes de liaison 19, associées par paires comprenant une ligne de réception et une ligne d'émission, assurent une transmission des données depuis, et en direction d'une même station distante. Les paires de lignes 19 sont connectées en parallèle au bus de transmission 18 à travers des coupleurs de ligne 10, munis de modems.

A titre d'exemple, un bus de transmission peut compter jusqu'a une trentaine de coupleurs de lignes auxquels sont connectables jusqu'a 8 lignes. La capacité du coupleur de bus de transmission 17 peut toutefois être supérieure à la capacité totale de connexion des coupleurs de lignes, de façon à éviter la saturation. Le nombre de coupleurs de lignes excédentaires résulte de la nécessité de prévoir des coupleurs distincts pour des types de lignés distincts.

Le rôle des coupleurs de ligne 10 est de mettre en série les caractères envoyés (octets de données à émettre) sous forme parallèle par le coupleur de bus de transmission 17 et destinés à être émis sur une ligne de transmission 19, et inversement de mettre en parallèle des caractères reçus (octets de données reçus) des lignes de transmission 19 et transmis vers le coupleur de bus de transmission 17, puis les moyens de traitement du commutateur.

Comme représenté en Fig 2 le CBT 17 contient une mémoire de données 20 contenant des espaces de mémoire tampon pour les données en provenance des lignes de transmission (mémoire de ligne réception 22), et destinées à être émises sur les lignes de transmission (mémoire de ligne émission 21).

Le CBT 17 comporte un dispositif d'interrogation des lignes 19 les unes après les autres. Lorsqu'une ligne demande un caractère à émettre et/ou dispose d'un caractère reçu, le coupleur de bus de transmission CBT 17 exécute successivement les cycles élémentaires suivants, chaque cycle ayant une durée fixe T :
. interrogation de la ligne en émission 51,
. lecture du caractère en mémoire de ligné émission 52,
. transfert du caractère vers la ligne 53,
. interrogation de la ligne en réception 54,
. transfert du caractère reçu vers le CBT 55,
. écriture du caractère dans la mémoire de ligne réception 56.

Ces étapes sont schématisées en figure 5.

Les trois premières opérations 51, 52, 53 correspondent à une phase d'émission sur la ligne i. Les trois dernières opérations 54, 55, 56 correspondent à une phase de réception des données fournies par la ligne i.

De façon avantageuse, et selon une caractéristique notable de l'invention, la durée totale de six cycles élémentaires correspondant à la juxtaposition des six étapes 51 à 56, peut être diminuée à une durée de cinq cycles (5T) par fusion des deux opérations d'interrogation de la ligne en émission 51 et de lecture du caractère en mémoire de ligne émission 52. En effet, en modifiant la logique du CBT 17 de façon à lui faire lire systématiquement le caractère à émettre en mémoire de ligne émission pendant l'interrogation de la ligne en émission, on améliore la capacité instantanée du CBT dans un rapport de 1/6è (16,7 %) à pleine charge. Lorsque le caractère lu n'a pas de signification (le résultat de l'interrogation de la ligne indiquant qu'elle n'appelle pas un caractère à émettre), le caractère lu est simplement ignoré.

L'interrogation de chacune des lignes i par le CBT s'effectue suivant une séquence d'interrogation stockée dans une mémoire de balayage des lignes. Cette séquence d'interrogation dépend notamment du débit des lignes.

La figure 2 schématise les modules principaux constitutifs du coupleur de bus de transmission 17.

Le coupleur comprend d'une part des moyens d'écriture dans la mémoire, constitués par une entité de logique câblée 23 (automate), dont un des rôles est de rapatrier les caractères reçus depuis les lignes de transmission 19 pour les écrire dans la mémoire de données 20 à la suite des caractères reçus précédemment modulo la taille de la mémoire FIFO tournante.

Les caractères sont lus dans la mémoire 20 au moyen d'une logique câblée à accès direct 24 (DMA) activée par le microprocesseur-pilote 9 associé au CBT 17.

L'automate 23 fonctionne en coopération avec une mémoire de comptage d'adresses 25, une mémoire de comptage d'octets 26 et une mémoire de comptage d'événement 27. En outre, il interroge les lignes connectées au bus de transmission 18 suivant les séquences de balayage stockées dans la mémoire de balayage 28.

La mémoire de comptage d'adresses 25 stocke les pointeurs d'adresse de chaque mémoire de ligne, à l'émission ou à la réception d'un caractère transitant par la mémoire de données 20.

La mémoire de comptage d'octets 26 assure un comptage qui permet de gérer la mémoire de ligne émission 21 et la mémoire de ligne réception 22 par bloc de caractères (voir explications relatives à la figure 3).

L'indépendance du débit d'écriture de l'automate 23, et du débit de lecture du DMA 24 ne pose pas de problème relativement à la gestion de la mémoire ligne émission 21. En effet, le CBT 17 est maître de l'émission, et commande l'écriture dans la mémoire sous fonction du contenu du compteur d'octets 26 lié à l'automate 23, au fur et à mesure du vidage de la mémoire en émission sur les lignes de transmission 19. Le seul incident envisageable serait non pas une saturation, mais un vidage complet de la mémoire ligne émission 21, au moment d'un appel de ligne. En ce cas,. le récepteur distant constatera une faute sur la ligne, et commandera la réémission de la trame courante.

Le risque de saturation apparaît spécifiquement en relation avec la mémoire de ligne réception 22. La chaîne de commande de lecture dans la mémoire de ligne réception est schématisée en figure 3. La mémoire de ligne réception est partitionnée en segments de mémoire correspondant à chacune des lignes interrogées ; en figure 3 est représenté un segment de la mémoire ligne réception 22, d'une capacité de 256 caractères dans l'exemple présenté. Le remplissage du segment de mémoire est effectué par blocs 35 de 64 caractères au maximum. Ces blocs sont découpés dans les trames reçues. Les caractères d'un même bloc doivent appartenir à une même trame, ce qui fait que les blocs de fin de trame sont quasi systématiquement inférieurs à 64 caractères. Un marquage est effectué dans la mémoire ligne réception pour chaque fin de trame, ou à défaut lorsque 64 caractères ont été écrits en mémoire de ligne réception depuis le dernier marquage.

Chaque marquage constitue un événement. Pour chaque événement, le CBT incrémente un totalisateur 31 en mémoire d'événement 27. Le totalisateur d'événements 31 peut avantageusement prendre une valeur de 1 à 7, sur trois bits.

Lorsque le microprocesseur-pilote 9 commande le vidage de tout ou partie de la mémoire de ligne réception 22 (effectué bloc par bloc), le CBT exécute un transfert DMA 24, et avertit le microprocesseur 9 à la fin du transfert. Ce dernier décrémente alors le totalisateur 31.

Le microprocesseur-pilote 9 est averti du remplissage de la mémoire au moyen d'interruptions signalant par exemple qu'il existe au moins un bloc en mémoire (le totalisateur 31 indique une valeur non nulle). Un drapeau d'interruption 32, dans la mémoire d'événement 27, peut être positionné dans un état de masquage des interruptions.

La génération des interruptions est effectuée par l'intermédiaire d'un compteur explorateur 33 qui adresse séquentiellement la mémoire d'événement 27. L'explorateur 33 s'arrête chaque fois que le bit de masquage d'interruption 32 est en position démasquée, et que le totalisateur 31 est différent de 0. Lorsque les conditions d'arrêt sont satisfaites, il y a génération d'une interruption DPCE 34.

Pour la réception de trames longues supérieures à 256 caractères, lorsque le totalisateur 31 atteint la valeur 4, la mémoire de ligne réception 22 est pleine. Si le microprocesseur pilote 9 est lent à traiter les événements, la mémoire de ligne 22 ne se vide pas assez rapidement et les nouveaux caractères reçus vont alors s'écrire à la place des premiers. Il y a alors écrasement de caractères dans la mémoire de ligne réception 22.

L'invention gère cette situation d'écrasement au moyen de deux principes :
. détection et marquage de l'écrasement de caractères en mémoire de ligne réception 22 ;
. signalisation de la faute au microprocesseur pilote 9, uniquement au moment de la lecture DMA des caractères dans la mémoire 22.

Le principe de détection repose sur le fait que l'automate 23 ne peut écrire valablement en mémoire de ligne réception 22 que si le caractère qu'il avait écrit précédemment à la même adresse a été évacué par le DMA 24. Dans le cas contraire, l'écriture du caractère courant écrase le caractère précédent qui n'a pas encore été lu, et la trame en cours de réception est perdue.

Par mémoire de ligne réception 22 (256 octets) on dispose de deux mémoires supplémentaires 41, 42 de chacune 256 bits (Fig. 4). Ces deux mémoires 41, 42 reçoivent les mêmes adresses que la mémoire de ligne réception 22. A chaque caractère 43 stocké dans un enregistrement de la mémoire de ligne réception 22 correspond un bit 44, 45 dans chaque mémoire supplémentaire 41, 42 respectivement.

La première mémoire supplémentaire 41 est appelée mémoire A et constitue un moyen de description de la validité de la mémoire de ligne réception 22 ;

la deuxième mémoire supplémentaire est appelée mémoire D, et constitue un moyen de description de la disponibilité de la mémoire de ligne réception pour l'écriture d'un nouveau caractère.

Lorsque le DMA 24 lit un caractère 43 en mémoire de ligne réception 22, le bit de même adresse de D 42 est mis à 1. Ceci signifie que l'adresse correspondante en mémoire de ligne réception 22 devient libre et que l'automate 23 ne provoquera pas d'écrasement de caractère lorsqu'il viendra écrire.

Lorsque l'automate 23 écrit un caractère en mémoire de ligne réception 22 il met à zéro le bit correspondant 45 de D 42. Ce bit ne pourra donc être remis à 1 que par le DMA 24.

Si, lorsque l'automate 23 écrit un caractère en mémoire de ligne réception 22, le bit correspondant 45 de D 42 est à 1, le caractère reçu est écrit à une adresse libre et il n'y a pas d'écrasement. Il marque alors la validité du caractère en écrivant a 1 le bit 44 de même adresse dans la mémoire A 41.

Si, lorsque l'automate 23 écrit un caractère en mémoire de ligne réception 22, le bit correspondant de D 42 est à zéro, le caractère reçu est en train d'être écrit à une adresse où un caractère n'a pas encore été exploité par le DMA 24 et ce caractère est détruit par l'écriture du nouveau caractère. L'automate 23 marque alors la non validité de la trame reçue en écrivant à 0 le bit de même adresse dans la mémoire A 41.

La mémoire A 41 enregistre donc la validité des caractères reçus.

Le principe de signalisation des trames à caractères écrasés est le suivant.

Chaque caractère de la mémoire de ligne réception 22 est accompagnée d'un bit de parité. Lorsque l'automate 23 écrit en mémoire de ligne réception 22, la parité du caractère reçu est calculée et enregistrée. Lorsque le DMA 24 lit le caractère en mémoire de ligne réception 22 la parité du caractère est à nouveau calculée et est comparée à la parité enregistrée. En cas de non concordance, le DMA 24 enregistre cette faute dans un mot d'état qui sera exploitée en fin de transfert DMA par le microprocesseur pilote 9. En cas de faute, le système d'exploitation rejette la trame et entame une procédure (connue) permettant de recevoir à nouveau cette trame.

Dans le cas de l'écrasement de caractères en mémoire de ligne réception 22, la trame correspondante est fausse. Le principe de signalisation consiste alors à exploiter les informations contenues dans le bit 44 de la mémoire A41 afin de générer par forçage une faute de parité ce qui entraînera un rejet de la trame reçue et une activation de la procédure de récupération.

Pendant la lecture par le DMA 24 d'un caractère 43 en mémoire de ligne réception 22 la valeur du bit correspondant 44 est testée. Si la valeur du bit 44 est 0 la valeur du bit de parité enregistrée est inversée donc rendue non conforme à la valeur de la parité calculée. Le DMA 24 enregistre alors une faute de parité dans le mot d'état, ce qui provoque le rejet de la trame reçu.

Bien entendu, le système de détection d'écrasement à deux mémoires supplémentaires A et D décrit ne constitue qu'un mode de réalisation de l'invention. L'invention couvre également toute autre variante de réalisation des moyens de description de l'état des emplacements de données dans la mémoire, susceptibles de prendre au moins trois valeurs distinctes (emplacement libre, emplacement occupé valide, emplacement occupé non valide) et coopérant avec les moyens d'écriture et les moyens de lecture des données dans la mémoire pour la mise à jour desdites valeurs.

## Revendications

1. Système de détection d'écrasement de données dans une mémoire tampon, notamment pour une mémoire tampon affectée à la réception de données fournies par une ligne de transmission et destinées à être traitées par un commutateur de données, la mémoire tampon (22) étant une mémoire FIFO tournante; comportant :
- un processeur (9);
- des moyens d'écriture (23) pour écrire des données provenant de la ligne de réception, l'écriture dans la mémoire tampon étant effectuée en fonction du débit d'alimentation desdites données ;
- des moyens de lecture (24) pour lire des données dans la mémoire tampon ; et pour les acheminer vers les moyens de traitement du commutateur, la lecture étant asservie au séquencement des moyens de traitement ;
- des moyens (23, 44, 45) pour détecter l'écrasement de données dans un emplacement de la mémoire tampon, à partir d'informations fournies par les moyens d'écriture (23) et par les moyens de lecture (24);
- des moyens (23, 44, 45) pour mémoriser chaque écrasement;
- des moyens (24) pour signaler une faute au processeur (9) , cette faute consistant à lire la mémoire tampon à un emplacement où les données ont été écrasées avant d'être lues ;
caractérisé en ce que les moyens pour lire des données dans la mémoire tampon et les moyens pour signaler une faute au processeur comportent une logique câblée (24) à accès direct à la mémoire tampon (20) , activée par le processeur (9);
en ce que cette logique câblée (24) signale une faute au processeur (9) uniquement au moment où des données sont lues dans la mémoire tampon (20) ;
en ce que les moyens (23, 44, 45) pour mémoriser chaque écrasement comportent des moyens (41, 42, 44, 45) de description de l'état des emplacements de données dans la mémoire tampon (20), susceptibles de prendre au moins trois valeurs distinctes :
- emplacement libre
- emplacement occupé valide
- emplacement occupé non valide
et en ce que lesdits moyens (41, 42, 44, 45) de description coopérent avec les moyens d'écriture (23) et les moyens de lecture (24), pour la mise à jour desdites valeurs prises par lesdits moyens de description de l'état des emplacements de données dans la mémoire.

2. Système selon la revendication 1, caractérisé en ce que les moyens (41, 42, 44, 45) de description de l'état des emplacements comportent des premiers moyens (42, 45) de description de l'état de disponibilité de la mémoire en écriture, lesdits moyens de description de disponibilité (42, 45) étant mis à jour par lesdits moyens de lecture (24) des données dans la mémoire (22), et des seconds moyens (41, 44) de description de la validité des données de la mémoire, lesdits moyens de description de validité (41, 44) étant mis à jour par les moyens d'écriture (23) de données dans la mémoire (22) en fonction des moyens de description de l'état de disponibilité (42, 45) au moment de l'écriture.

3. Système selon l'une quelconque des revendications 1 ou 2 caractérisé en ce que lesdits moyens de description de disponibilité (42,45) sont constitués par une table (42) de drapeaux constitués chacun d'un bit (45) associé à au moins un enregistrement de la mémoire (22).

4. Système selon l'une quelconque des revendications 2 ou 3 caractérisé en ce que lesdits moyens de description de validité (41,44) sont constitués par une table (41) de drapeaux constitués chacun par un bit (44) associé à au moins un enregistrement de ladite mémoire (22).

5. Système selon l'une quelconque des revendications 3 et 4 caractérisé en ce que lesdits moyens de description de disponibilité (42,45) et/ou de validité (41,44) sont accédés par lesdits moyens de lecture (24) simultanément à ladite mémoire (22), de stockage des données.

6. Système selon l'une quelconque des revendications 1 à 5, caractérisé en ce que lesdits moyens d'écriture (23) comprennent des moyens de chargement des trames de données par blocs (35) de N données maximum (N étant inférieur à la capacité de la mémoire), et des moyens de marquage des fins de blocs chargés dans ladite mémoire (22),
et en ce que lesdits moyens de marquage coopèrent avec des moyens d'émission d'un signal d'activation desdits moyens de lecture lorsqu'au moins un bloc de données est présent dans la mémoire (22).

7. Système selon la revendication 6 caractérisé en ce que lesdits moyens d'émission d'un signal d'activation comprennent d'une part un compteur totalisateur (31) du nombre de trains présents dans la mémoire, ledit compteur (31) étant incrémenté par lesdits moyens de chargement de blocs de données, et décrémenté par lesdits moyens de lecture (24), et d'autre part des moyens d'émission d'une interruption en direction d'un microprocesseur (9) de commande des moyens de lecture (24) lorsque ledit compteur (31) marque une valeur non nulle.

8. Système selon une quelconque des revendications 1 ou 2 caractérisé en ce que les moyens de lecture (24) acquièrent une information de validité pour chacune des données lues dans la mémoire tampon (22), et en ce que des moyens de signalisation de faute sont émis en direction des moyens de traitement lorsque l'information de validité est à l'état "non valide".

9. Système selon la revendication 8 caractérisé en ce que les moyens de formation de ladite information de validité de donnée comprennent des moyens de calcul et d'enregistrement d'un bit de parité pour chaque donnée écrite dans la mémoire tampon (22), et des moyens de forçage en faute du bit de parité de chaque donnée en lecture dans la mémoire tampon (22) en fonction de l'état des moyens (41,44) de description de la validité de la donnée.

10. Système selon la revendication 8 caractérisé en ce qu'il comprend des moyens de rejet de la trame courante et d'activation d'une procédure de récupération de trame lorsque lesdits moyens de signalisation sont à l'état "faute".

## Patentansprüche

1. System zur Erfassung der Zerstörung von Daten in einem Pufferspeicher, insbesondere für einen Pufferspeicher, der für den Empfang von über eine Übertragungsleitung gelieferten und von einer Datenvermittlung zu verarbeitenden Daten bestimmt ist, wobei der Pufferspeicher (22) ein rotierender FIFO-Speicher ist und das System aufweist:
- einen Prozessor (9),
- Schreibmittel (23), um von der Empfangsleitung kommende Daten in den Pufferspeicher einzuschreiben, wobei dieses Einschreiben abhängig vom Durchsatz der ankommenden Daten erfolgt,
- Lesemittel (24), um Daten aus dem Pufferspeicher auszulesen und sie zu den Verarbeitungsmitteln der Vermittlung zu senden, wobei das Auslesen vom Ablauf der Verarbeitung in den Verarbeitungsmitteln abhängt,
- Mittel (23, 44, 45), um die Zerstörung von Daten in einer Zelle des Pufferspeichers aufgrund von Informationen zu erfassen, die von den Schreib- und Lesemitteln (23, 24) geliefert werden,
- Mittel (23, 44, 45), um jede Zerstörung zu speichern,
- Mittel (24), um einen Fehler dem Prozessor (9) zu melden, wobei der Fehler darin besteht, daß eine Puffer-speicherzelle ausgelesen wird, an der die Daten zerstört wurden, ehe sie gelesen wurde,
dadurch gekennzeichnet, daß die Mittel zum Lesen der Daten aus dem Pufferspeicher und die Mittel, die einen Fehler dem Prozessor melden, aus einer verdrahteten Logik (24) mit direktem Zugang zum Pufferspeicher (20) bestehen, die durch den Prozessor (9) aktiviert wird,
daß diese verdrahtete Logik (24) dem Prozessor (9) einen Fehler erst in dem Augenblick meldet, in dem Daten aus dem Pufferspeicher (20) ausgelesen werden,
daß die Mittel (23, 44, 45) zur Speicherung jeder Zerstörung Mittel (41, 42, 44, 45) zur Beschreibung des Zustands der Datenzellen im Pufferspeicher (20) enthalten, die mindestens drei verschiedene Werte annehmen können:
- freie Zelle,
- besetzte, aber bestätigte Zelle,
- besetzte, aber nicht bestätigte Zelle,
und daß die Mittel (41, 42, 44, 45) zur Beschreibung mit den Schreib- und Lesemitteln (23, 24) für die Aktualisierung der Werte zusammenwirken, die von den Mitteln zur Beschreibung des Zustands der Datenzellen im Speicher angenommen werden.

2. System nach Anspruch 1, dadurch gekennzeichnet, daß die Mittel (41, 42, 44, 45) zur Beschreibung des Zustands der Speicherzellen erste Mittel (42, 45) zur Beschreibung des Verfügbarkeitszustands des Speichers in Schreibrichtung besitzen, die durch die Lesemittel (24) für die Daten aus dem Speicher (22) aktualisiert werden, und zweite Mittel (41, 44) zur Beschreibung der Bestätigung der Daten im Speicher, die durch die Mittel (23) zum Einschreiben von Daten in den Speicher (22) abhängig von den Mitteln zur Beschreibung des Verfügbarkeitszustands (42, 45) im Schreib-augenblick aktualisiert werden.

3. System nach einem beliebigen der Ansprüche 1 oder 2, dadurch gekennzeichnet, daß die Mittel zur Beschreibung der Verfügbarkeit (42, 45) aus einer Tabelle (42) von Flaggen bestehen, die je ein Bit (45) enthalten, das mindestens einer Zelle des Speichers (22) zugeordnet ist.

4. System nach einem beliebigen der Ansprüche 2 oder 3, dadurch gekennzeichnet, daß die Mittel zur Beschreibung der Bestätigung (41, 44) aus einer Tabelle (41) von Flaggen bestehen, die je aus einem Bit (44) bestehen, welches mindestens einer Zelle des Speichers (22) zugeordnet ist.

5. System nach einem beliebigen der Ansprüche 3 und 4, dadurch gekennzeichnet, daß die Mittel zur Beschreibung der Verfügbarkeit (42, 45) und/oder der Bestätigung (41, 44) von den Lesemitteln (42) gleichzeitig mit dem Speicher (22) für die Daten angesteuert werden.

6. System nach einem beliebigen der Ansprüche 1 bis 5, dadurch gekennzeichnet, daß die Schreibmittel (23) Mittel zum Laden der Datenrahmen in Blöcken (35) von höchstens N Dateneinheiten (N ist kleiner als die Kapazität des Speichers) sowie Markiermittel für das Ende der in den Speicher (22) transferierten Blöcke enthalten, und daß die Mittel zur Markierung mit Mitteln zum Aussenden eines Signals zur Aktivierung der Lesemittel zusammenwirken, wenn mindestens ein Datenblock im Speicher (22) vorhanden ist.

7. System nach Anspruch 6, dadurch gekennzeichnet, daß die Mittel zum Aussenden eines Aktivierungssignals einerseits einen Zähler (31), der die Anzahl der im Speicher vorhandenen Datenzüge zählt und durch die Mittel zum Laden der Datenblöcke inkrementiert sowie durch die Lesemittel (24) dekrementiert wird, und andererseits Mittel zum Aussenden eines Unterbrechungssignals an einen Mikroprozessor (9) zur Steuerung der Lesemittel (24) enthalten, wenn der Zähler (31) einen Wert ungleich Null anzeigt.

8. System nach einem beliebigen der Ansprüche 1 oder 2, dadurch gekennzeichnet, daß die Lesemittel (24) eine Information über die Bestätigung für jede der aus dem Pufferspeicher (22) ausgelesenen Dateneinheiten erfassen und daß eine Fehlermeldung in Richtung auf die Verarbeitungsmittel ausgesendet wird, wenn die Bestätigungsinformation den Zustands "nicht bestätigt" enthält.

9. System nach Anspruch 8, dadurch gekennzeichnet, daß die Mittel zur Bildung der Bestätigungsinformation Mittel zur Berechnung und Speicherung eines Paritätsbits für jede in den Pufferspeicher (22) eingetragene Dateneinheit sowie Mittel zur Umkehrung des Paritätsbits jeder aus dem Pufferspeicher (22) gelesenen Dateneinheit abhängig vom Zustand der Mittel (41, 44) zur Beschreibung der Bestätigung der Dateneinheit aufweisen.

10. System nach Anspruch 8, dadurch gekennzeichnet, daß es Mittel zur Zurückweisung des laufenden Rahmens und zur Aktivierung einer Prozedur zur Wiedergewinnung des Rahmens enthält, wenn die Meldemittel einen Fehler angezeigt haben.

## Claims

1. A system for detecting overwriting of data in a buffer memory, notably for a buffer memory assigned to the reception of data supplied by a transmission line and intended to be processed by a data switch, the buffer memory (22) being a rotating FIFO memory; including:
- a processor (9);
- writing means (23) for writing data originating from the reception line, writing in the buffer memory being performed as a function of the rate at which said data is supplied;
- reading means (24) for reading the data in the buffer memory and routing it towards the processing means within the switch, reading being under the control of the sequencing of the processing means;
- means (23, 44, 45) for detecting overwriting of data in a location of the buffer memory from information provided by the write means (23) and the read means (24);
- means (23, 44, 45) for memorising each overwriting;
- means (24) for signalling a fault to the processor (9), the fault consisting in reading the buffer memory at a location at which data has been overwritten before being read;
characterised in that the means for reading data in the buffer memory and the means for signalling a fault to the processor include hardwired logic (24) with direct memory access to the buffer memory (20), activated by the processor (9);
in that said hardwired logic (24) signals a fault to a processor (9) only at the time data is read in the buffer memory (20);
in that the means (23, 44, 45) for memorising each overwriting include means (41, 42, 44, 45) for describing the status of the data locations in the buffer memory (20), adapted to adopt at least three distinct values:
- unoccupied location;
- valid occupied location;
- non-valid occupied location;
and in that said description means (41, 42, 44, 45) cooperate with the means for writing (23) and the means for reading (24) in order to update said values adopted by said description means of the status of the data locations in the memory.

2. System according to claim 1, characterised in that the means (41, 42, 44, 45) for describing the status of the memory locations include first means (42, 45) for describing the availability status of the memory for writing, said description means (42, 45) for availability being updated by said means (24) for reading the data in the memory (22), and second means (41, 44) for describing the validity of the data in the memory, said means (41, 44) for describing the validity being updated by the means (23) for writing the data in the memory (22) as a function of the means (42, 45) for describing the availability status at the time of writing.

3. System according to claim 1 or claim 2 characterised in that said availability description means (42, 45) are constituted by a flags table (42), each flag being constituted by a bit (45) associated with at least one record in the memory (22).

4. System according to claim 2 or claim 3 characterised in that said validity description means (41, 44) are constituted by a flags table (41), each flag being constituted by a bit (44) associated with at least one record in said memory (22).

5. System according to claim 3 or claim 4 characterised in that said availability and/or validity description means (42, 45; 41, 44) are accessed by said read means (24) simultaneously with said data storage memory (22).

6. System according to any one of claims 1 to 5 characterised in that said writing means (23) comprise means (35) for loading frames of data in blocks of N maximum items of data (N being less than the capacity of the memory) and means (22) for marking the ends of the blocks loaded into said memory,
and in that said marking means cooperate with means for sending a signal for activating said read means when at least one block of data is present in the memory (22).

7. System according to claim 6, characterised in that said means for sending an activation signal include a cumulative counter (31) for the number of frames present in the memory, said counter (31) being incremented by said data block loading means and decremented by said read means (24), and means for sending an interrupt signal towards a command microprocessor (9) for the read means (24) when said counter (31) marks a non-zero value.

8. System according to claim 1 or claim 2 characterised in that the read means (24) acquire validity information for each one of the items of data read in the buffer memory (22), and in that fault signalling means addressed to the processing means are activated when the validity information is at the "non-valid" status.

9. System according to claim 8, characterised in that the means for forming said data validity information comprise means for calculating and recording a parity bit for each item of data written into the buffer memory (22), and means for forcing the parity bit to "fault" for each item of data at readout in the buffer memory (22) as a function of the status of the means (41, 44) for describing validity of the data.

10. System according to claim 8, characterised in that it includes means for rejecting the current frame and activating a procedure for frame recovery when said signalling means are at the "fault" status.
